# EUROPÄISCHE PATENTANMELDUNG

(11) **EP 1 232 685 A2**
(43) Veröffentlichungstag der Anmeldung: **21.08.2002**
(21) Anmeldenummer: 02002592.0
(22) Anmeldetag: 05.02.2002
(51) Int. Cl.: A01G 27/06

(54) **Vorrichtung zum Bewässern eines Blumentopfes**

(30) Priorität: 16.02.2001 DE 10107841; 06.04.2001 DE 10117419
(71) Anmelder: Bengsch, Lutz, Oslo 11 (NO)
(72) Erfinder: Bengsch, Lutz, Oslo 11 (NO)
(74) Vertreter: Blaumeier, Jörg - Patentanwalt

(57) **Zusammenfassung**

Vorrichtung zum Bewässern eines Blumentopfes (17), der in einer unteren Position in einen einen Wasservorrat enthaltenden Übertopf (15) vom Boden beabstandet einsetzbar und in einer oberen Position im Bereich der Oberkante des Übertopfes (15) abstellbar ist, wobei in den Blumentopf (17) ein Docht zur Versorgung mit Feuchtigkeit eingesetzt ist, dessen anderes Ende in dem Wasservorrat liegt, wobei die Vorrichtung eine erste Aufstelleinrichtung (2,5) zum Abstellen des Blumentopfes (17) in einer unteren Position und eine zweite, auf den Übertopf (15) auflegbare oder in den Übertopf (15) einsetzbare und im Bereich der Oberkante des Übertopfes (15) klemmend gehaltene Aufstelleinrichtung (8,9) zum Abstellen des Blumentopfes (17) in der oberen Position aufweist.

## Beschreibung

Die Erfindung betrifft eine Vorrichtung zum Bewässern eines Blumentopfes, der in einer unteren Position in einen einen Wasservorrat enthaltenden Übertopf vom Boden beabstandet einsetzbar und in einer oberen Position im Bereich der Oberkante des Übertopfes abstellbar ist, wobei in den Blumentopf ein Docht zur Versorgung mit Feuchtigkeit eingesetzt ist, dessen anderes Ende in dem Wasservorrat liegt.

Diese Vorrichtung dient dem Zweck, das Bewässern von Blumen oder Pflanzen auch während der Abwesenheit des Besitzers sicherzustellen. Zudem wird das versehentliche Überwässern von Pflanzen vermieden.

In der Druckschrift EP 0 665 709 B1 wird eine Vorrichtung beschrieben, die in einer ersten, zusammengeklappten Stellung in einen Übertopf gelegt wird und zum Abstellen eines Blumentopfes dient. Diese Vorrichtung weist ausklappbare Kantenpartien auf, die in einer zweiten, oberen Stellung den oberen Rand des Übertopfes umgreifen, so dass der Blumentopf darauf abgestellt werden kann. Der Übertopf wird mit Wasser gefüllt, in den ein mit dem Blumentopf verbundener Docht eintaucht, so dass die Pflanze Feuchtigkeit ansaugen kann. Diese bekannte Vorrichtung weist jedoch den Nachteil auf, dass sie relativ genau an die Größe und die Form des Übertopfes angepasst sein muss, bzw. dass für unterschiedlich große Übertöpfe verschiedene Vorrichtungen erforderlich sind.

Der Erfindung liegt damit das Problem zugrunde, den genannten Nachteil zu vermeiden und eine Vorrichtung anzugeben, die flexibler einsetzbar ist.

Zur Lösung dieses Problems ist bei einer Vorrichtung zum Bewässern eines Blumentopfes der eingangs genannten Art erfindungsgemäß vorgesehen, dass sie eine erste Aufstelleinrichtung zum Abstellen des Blumentopfes in einer unteren Position und eine zweite, auf den Übertopf auflegbare oder in den Übertopf einsetzbare und im Bereich der Oberkante des Übertopfes klemmend gehaltene Aufstelleinrichtung zum Abstellen des Blumentopfes in der oberen Position aufweist.

Die erfindungsgemäße Vorrichtung besteht aus zwei separaten Aufstelleinrichtungen, wobei die erste Aufstelleinrichtung in den Übertopf eingesetzt wird. Die zweite Aufstelleinrichtung wird auf den Rand des Übertopfes aufgesetzt, sie ist also größer als die erste Aufstelleinrichtung. Sie kann in Abhängigkeit von den Größenverhältnissen auch in den Übertopf eingesetzt und im oberen Bereich des Übertopfes klemmend gehalten werden. An den Aufstelleinrichtungen können Standfüße lösbar befestigt werden, so dass die Aufstelleinrichtung im Übertopf vom Boden beabstandet steht.

Zweckmäßig ist die zweite Aufstelleinrichtung ringförmig ausgebildet. Der Begriff "ringförmig" umfasst in diesem Zusammenhang sowohl rund ausgebildete Aufstelleinrichtungen, als auch vieleckig ausgebildete Aufstelleinrichtungen, die auf entsprechend geformte Übertöpfe aufsetzbar sind. Die Aufstelleinrichtungen können dreieckig, viereckig, sechseckig u.s.w. geformt sein.

In einer Weiterbildung der Erfindung ist vorgesehen, dass an der zweiten Aufstelleinrichtung vorzugsweise radial zum Ring verlaufende Profilabschnitte lösbar befestigbar sind. Besonders bevorzugt wird es, dass an der zweiten Aufstelleinrichtung zwei sich im Bereich der Ringmitte kreuzende Profilabschnitte lösbar befestigbar sind. Dadurch besteht die Abstellfläche für den Blumentopf aus einem Ring, der in seiner Mitte eine kreuzartige Verstärkung aufweist. Auf diese Weise wird ein sicherer Stand und eine große Standsicherheit für einen Blumentopf erzielt. Es ist auch denkbar, vier Profilabschnitte zu verwenden, die in der Form eines Rechtecks an der zweiten Aufstelleinrichtung befestigt sind.

Eine weitere Erhöhung der Standsicherheit wird erreicht, wenn die Profilabschnitte die zweite Aufstelleinrichtung außenseitig überragen. Dadurch ergibt sich eine vergrößerte Aufstellfläche.

Die Profilabschnitte werden dabei bevorzugt derart auf die zweite Aufstelleinrichtung aufgesetzt, dass die Oberseiten der Profilabschnitte in einer Ebene liegen.

Auch der Kreuzungsbereich zwischen zwei Profilabschnitten ist somit eben, so dass ein Kippen oder Wackeln vermieden wird.

Blumentöpfe, die im Vergleich zum Übertopf klein sind, können bei der erfindungsgemäßen Vorrichtung derart in die zweite Aufstelleinrichtung eingesetzt werden, dass ihre Außenmantelflächen an der Ringinnenfläche klemmend anliegen. Dazu wird der Blumentopf in die ringförmige zweite Aufstelleinrichtung eingesetzt. Blumentöpfe weisen zumeist einen sich kegelartig verjüngenden Mantel auf, der in einer bestimmten Höhe mit dem Innendurchmesser der zweiten Aufstelleinrichtung übereinstimmt. Nach dem Einsetzen des Blumentopfes in die zweite Aufstelleinrichtung liegt dieser in Abhängigkeit von seiner Größe teilweise unterhalb der Aufstelleinrichtung, das heißt innerhalb des Übertopfes und teilweise oberhalb der Aufstelleinrichtung. Die Vorrichtung ist daher für eine große Anzahl verschiedenartiger Blumentöpfe und Übertöpfe geeignet.

Es ist zweckmäßig, dass das mit dem Blumentopf verbundene Ende des Dochts um einen stabförmigen Dochthalter wickelbar ist, der durch eine unterseitige Öffnung in den Blumentopf einsetzbar ist. In vorteilhafter Weiterbildung kann vorgesehen sein, dass der Dochthalter eine unter einem Winkel zu seiner Längsachse verlaufende, umlaufende Nut aufweist, so dass der Docht auf die Nut aufgewickelt werden kann. Im Vergleich zu bekannten Dochthaltern ist die auf diese Weise erzeugte angefeuchtete Berührfläche wesentlich größer, wobei die Feuchtigkeitsabgabe gleichmäßig und in alle Richtungen erfolgt.

In einer Weiterbildung der Erfindung kann vorgesehen sein, dass an der Aufstelleinrichtung wenigstens ein Standfuß zum Abstellen in einem Übertopf angeformt ist. Der darauf abgestellte Blumentopf steht erhöht, so dass der Übertopf bis zur Höhe der Aufstelleinrichtung mit Wasser gefüllt werden kann, ohne dass der Blumentopf damit in Kontakt kommt.

Es bietet sich an, den Standfuß an der Unterseite der Aufstelleinrichtung umlaufend auszubilden. An der Aufstelleinrichtung können auch mehrere Standfüße konzentrisch angeordnet sein. Dadurch wird eine verbesserte Stabilität erreicht, so dass auch schwerere Blumentöpfe darauf abgestellt werden können.

Diese Vorrichtung weist den Vorteil auf, dass die Aufstelleinrichtung nicht nur im Inneren eines Übertopfes abgestellt werden kann, sondern ebenso auf den Rand eines Übertopfes aufgelegt werden kann. Um eine verbesserte Anpassung an unterschiedlich große Übertöpfe und Blumentöpfe zu erreichen kann vorgesehen sein, an der Aufstelleinrichtung Halteelemente zu befestigen, die die Aufstelleinrichtung innen und/oder außen überragen. Dazu ist in einer Weiterbildung der Erfindung vorgesehen, dass die Halteelemente U-förmig ausgebildet sind und mit ihrer offenen Seite vorzugsweise radial auf die Aufstelleinrichtung aufschiebbar sind, wobei die Halteelemente die Aufstelleinrichtung mit ihren Schenkeln oberund/oder unterseitig umgreifen. Dadurch wird ein besonders guter Halt erzielt. Die Größenverhältnisse der Halteelemente und der Aufstelleinrichtung können dabei so aufeinander abgestimmt sein, dass die Halteelemente klemmend gehalten werden und auch bei Belastung nicht zum Verrutschen neigen.

Eine verbesserte Befestigung wird erzielt, wenn die Aufstelleinrichtung auf ihrer Oberseite und/oder im Bereich ihrer Standfüße Vertiefungen und/oder Vorsprünge aufweist. Es empfiehlt sich, auch die innenliegenden Flächen der Halteelemente mit entsprechenden Vertiefungen und/oder Vorsprüngen zu versehen, die gegengleich zu den entsprechenden Flächen der Aufstelleinrichtung ausgebildet sind. Die Halteelemente können dann auf die Aufstelleinrichtung aufgeschoben und formschlüssig verrastet werden. Trotzdem kann die Größe der Aufstelleinrichtung jederzeit durch radiales Verschieben der Halteelemente nach innen oder außen angepasst werden, beispielsweise wenn ein Blumentopf mit einer anderen Größe verwendet werden soll.

Der Einsatzbereich der erfindungsgemäßen Vorrichtung wird weiter vergrößert, wenn die Verbindung zwischen dem oberen und dem unteren Schenkel des Halteelements als Filmscharnier ausgebildet ist. In diesem Fall ist es nicht notwendigerweise erforderlich, dass der obere und der untere Schenkel des Halteelements deckungsgleich sind. Der untere Schenkel kann beispielsweise weiter nach innen vorstehen, so dass ein Blumentopf auf dem unteren Schenkel aufsteht und am oberen Schenkel seitlich anliegt. Dadurch wird eine besonders gute Standsicherheit erzielt.

Bei einer alternativen Ausführungsform der Erfindung kann vorgesehen sein, dass an der Aufstelleinrichtung nach innen und/oder außen verschwenkbare Halteelemente lösbar befestigbar sind. Diese Halteelemente sind mit der Aufstelleinrichtung über einen als Drehpunkt dienenden Befestigungspunkt verbunden. Sie lassen sich um diesen Drehpunkt verschwenken, so dass die Gesamtaufstellfläche entweder im Inneren der Aufstelleinrichtung oder nach außen vergrößert werden kann. Vorzugsweise sind an der Aufstelleinrichtung Stecköffnungen vorgesehen, in die zur Fixierung der Halteelemente Sicherungsstifte einsteckbar sind. Damit wird ein Verschieben oder Verrutschen der Halteelemente bei seitlicher Belastung verhindert. Die Sicherungsstifte können auch an den Halteelementen angeformt sein.

Gemäß einer weiteren Ausführungsalternative der Erfindung kann ein abgewinkeltes Halteelement verwendet werden, das in eine Ausnehmung der Aufstelleinrichtung einsetzbar ist. Vorzugsweise werden vier auf dem Umfang verteilte Halteelemente verwendet. Ein Halteelement kann aus drei Abschnitten bestehen, die rechtwinklig zueinander angeordnet sind, wobei die beiden äußeren Flächen parallel zueinander liegen. Das Halteelement kann so in die Ausnehmung der Aufstelleinrichtung eingesetzt werden, dass eine erste Fläche auf der Oberseite und eine zweite Fläche an der Unterseite der Aufstelleinrichtung anliegt. Die Länge der mittleren Fläche des Halteelements muss dabei in etwa der Dicke der Aufstelleinrichtung entsprechen.

Die erfindungsgemäße Vorrichtung kann aus einem Kunststoffmaterial durch Spritzgießen hergestellt werden. Dieses Herstellungsverfahren ist bei größeren Stückzahlen kostengünstig. Es wird dabei bevorzugt, dass die erfindungsgemäße Vorrichtung als zusammenhängendes Spritzgussteil mit abtrennbaren Einzelteilen herstellbar ist. Das Spritzgussteil kann Einzelteile für mehrere, vorzugsweise zwei oder drei Vorrichtungssätze umfassen. Diese Variante ist ebenfalls besonders kostengünstig, da lediglich die Herstellung einer einzigen Form erforderlich ist. Zudem enthält das Spritzgussteil mehrere, unterschiedlich große Einzelteile sowohl für die erste, als auch für die zweite Aufstelleinrichtung. Diese können beliebig kombiniert werden, so dass praktisch für jeden Anwendungsfall die passenden Aufstelleinrichtungen vorhanden sind.

Aus fertigungstechnischen Gründen wird es bevorzugt, dass bei einem zwei Vorrichtungssätze umfassenden Spritzgussteil die erste Aufstelleinrichtung des ersten Satzes kreisförmig und die erste Aufstelleinrichtung des zweiten Satzes und die zweiten Aufstelleinrichtungen des ersten und zweiten Satzes als konzentrische Ringe ausgebildet sind, wobei der Außendurchmesser eines Teils im Wesentlichen dem Innendurchmesser des benachbarten Teils entspricht. Diese Anordnung zeichnet sich sowohl durch einen geringen Materialbedarf, als auch durch ihre geringe Größe aus.

Das Spritzgussteil kann wenigstens vier vorzugsweise rechteckig angeordnete Profilabschnitte aufweisen, die zweckmäßig als U-Profil ausgebildet sind. Zusätzlich kann jeder Profilabschnitt Rastelemente zum Verrasten an einer Aufstellfläche aufweisen, wobei die Rastelemente als L-förmige Winkel ausgebildet sein können, deren freie Enden in Längsrichtung des Profilabschnitts nach außen weisen. Die Winkel sind jeweils paarweise in gleichem Abstand von der Mitte des Profilabschnitts angeordnet, wobei ihre Position an den Innendurchmesser der ringförmigen zweiten Aufstelleinrichtungen angepasst ist. An einem Profilabschnitt können mehrere, vorzugsweise zwei Paare von Winkeln angeordnet sein, die für unterschiedlich große Aufstelleinrichtungen vorgesehen sind. Zum Verrasten wird ein Profilabschnitt auf eine zweite Aufstelleinrichtung aufgesetzt, so dass die freien Enden der Winkel einander gegenüberliegende Abschnitte der kreisförmigen Öffnung umgreifen.

Die Erfindung wird im Folgenden anhand mehrerer Ausführungsbeispiele unter Bezugnahme auf die Zeichnungen näher erläutert. Die Zeichnungen sind schematische Darstellungen und zeigen:
- Fig. 1: ein als Spritzgussteil mit abtrennbaren Einzelteilen ausgebildetes Ausführungsbeispiel der erfindungsgemäßen Vorrichtung,
- Fig. 2: eine erste Aufstelleinrichtung, die in einen Übertopf eingesetzt ist,
- Fig. 3: einen mit einem Docht umwickelten Dochthalter,
- Fig. 4: einen auf einer ersten Aufstelleinrichtung abgestellten Blumentopf in einer unteren Position,
- Fig. 5: den in Fig. 4 gezeigten Blumentopf in einer oberen Position,
- Fig. 6: den Aufbau einer ersten Aufstelleinrichtung,
- Fig. 7: eine zweite Aufstelleinrichtung, auf der zwei sich kreuzende Profilabschnitte befestigt sind,
- Fig. 8: eine geschnittene Detailansicht der Aufstelleinrichtung von Fig. 7 entlang der Linie VIII - VIII,
- Fig. 9: ein zweites Ausführungsbeispiel der erfindungsgemäßen Vorrichtung, das eine größere Anzahl von Einzelteilen umfasst,
- Fig. 10: ein drittes Ausführungsbeispiel der Erfindung mit einer durch verschiebbare Halteelemente einstellbaren Aufstelleinrichtung,
- Fig. 11: ein Halteelement der Aufstelleinrichtung von Fig. 10,
- Fig. 12: ein viertes Ausführungsbeispiel der Erfindung mit einer durch verschwenkbare Halteelemente einstellbaren Aufstelleinrichtung,
- Fig. 13: ein fünftes Ausführungsbeispiel der Erfindung in Form eines Spritzgussteils mit abtrennbaren Einzelteilen,
- Fig. 14: eine aus Einzelteilen des Spritzgussteils in Fig. 13 zusammengesetzte Aufstellvorrichtung mit Z-förmigen Verlängerungen, und
- Fig. 15: die Unterseite einer kreuzförmigen Aufstellvorrichtung.

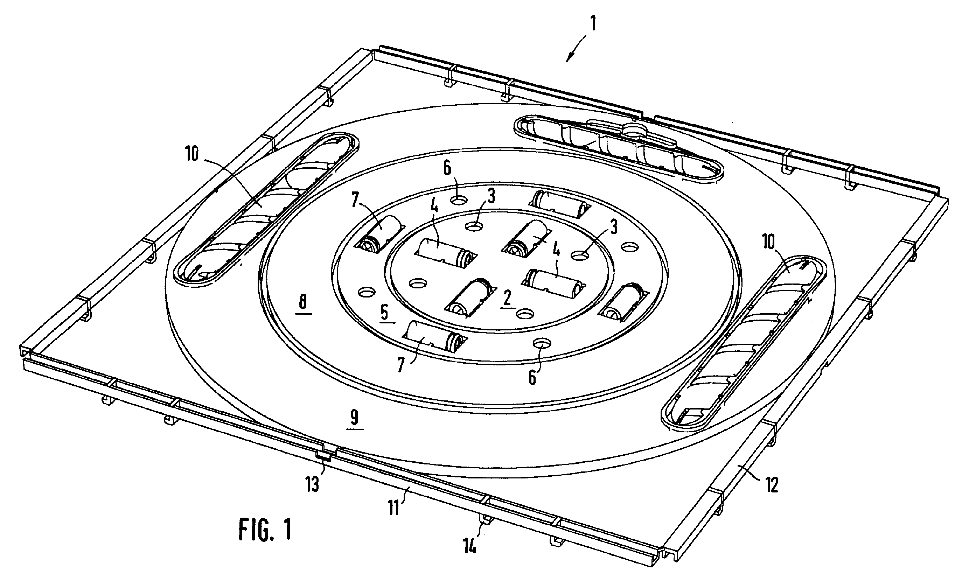

Fig. 1 zeigt in einer perspektivischen Ansicht ein Spritzgussteil 1, das sämtliche Einzelteile der Vorrichtung enthält. Die Einzelteile sind zwar in einer Form aneinander gespritzt, sie lassen sich jedoch einfach voneinander trennen und können separat verwendet werden. Das Spritzgussteil 1 besteht aus einer kreisförmigen ersten Aufstelleinrichtung 2, die im Zentrum des Spritzgussteils 1 angeordnet ist. Die erste Aufstelleinrichtung 2 kann in einen Übertopf eingesetzt werden, um einen Blumentopf darauf in einer etwas erhöhten Position abzustellen. Dazu weist die erste Aufstelleinrichtung 2 insgesamt vier kreisförmige Öffnungen 3 auf, in die jeweils ein Fuß 4 eingesetzt werden kann. Im Lieferzustand sind die Füße 4 liegend in entsprechenden Ausnehmungen der ersten Aufstelleinrichtung 2 angeordnet. Die Füße 4 sind nur über wenige Befestigungspunkte mit der Aufstelleinrichtung 2 verbunden und lassen sich einfach heraustrennen. Die Füße 4 werden in die Öffnungen 3 gesteckt, so dass die erste Aufstelleinrichtung 2 das Abstellen eines Blumentopfes in einen Übertopf in einer etwas erhöhten Position gestattet.

An die Kreisfläche der ersten Aufstelleinrichtung 2 schließt sich außenseitig eine Ringfläche an. Dabei handelt es sich um eine weitere erste Aufstelleinrichtung 5, die analog Öffnungen 6 und Füße 7 aufweist. Die Füße 7 können entnommen und in die Öffnungen 6 eingesetzt werden, so dass sich eine weitere erste Aufstelleinrichtung mit einem vergrößerten Durchmesser ergibt. Diese ist für Übertöpfe mit einem größeren Innendurchmesser geeignet.

Daran schließt sich außenseitig eine ringförmig ausgebildete zweite Aufstelleinrichtung 8 an. Zwischen den beiden Ringen 5, 8 befindet sich ein schmaler ringförmiger Freiraum, der von kleinen Befestigungspunkten unterbrochen wird, die aus fertigungstechnischen Gründen erforderlich sind und den Zusammenhalt der Einzelteile gewährleisten. Die zweite Aufstelleinrichtung kann auf die Oberkante eines Übertopfes gelegt werden, so dass der Blumentopf darauf abgestellt werden kann. Die zweite Aufstelleinrichtung 8 kann alternativ auch in einen kegelförmig ausgebildeten Übertopf eingesetzt werden, so dass sie in einer bestimmten Höhe klemmend gehalten wird. Anschließend wird der Blumentopf in Abhängigkeit von seiner Größe auf die zweite Aufstelleinrichtung 8 aufgesetzt oder in diese eingesetzt, so dass der Blumentopf teilweise unterhalb und teilweise oberhalb der zweiten Aufstelleinrichtung 8 gehalten wird.

Eine weitere zweite Aufstelleinrichtung 9 schließt sich unmittelbar an die zweite Aufstelleinrichtung 8 außenseitig an. Diese eignet sich für größere Übertöpfe und kann analog entweder auf den Übertopf aufgesetzt oder in die Öffnung eingesetzt werden. Ferner weist die zweite Aufstelleinrichtung 9 mehrere entnehmbare Dochthalter 10 auf, die in entsprechenden Ausnehmungen der Aufstelleinrichtung 9 angeordnet sind. Der Dochthalter 10 ist flach ausgebildet und weist eine langgestreckte, im Wesentlichen rechteckige Außenkontur auf. Er weist außenseitig eine Spirale auf und wird mit einem Docht oder dergleichen umwickelt und von der Unterseite her in einen Blumentopf gesteckt, so dass die Pflanze über den Docht Feuchtigkeit aus einem Wasservorrat ansaugen kann. Die effektive Länge des angefeuchteten Dochtes wird auf diese Weise beträchtlich verlängert, wodurch sich eine bessere und gleichmäßigere Bewässerung ergibt.

An der ringförmigen Aufstelleinrichtung 9 sind außenseitig insgesamt vier stabförmige Profilabschnitte 11, 12 angeordnet, so dass sich insgesamt ein quadratischer Umriss ergibt. Die Profilabschnitte 11, 12 können auf die zweiten Aufstelleinrichtungen 8 bzw. 9 aufgesetzt und befestigt werden, so dass diese kreuzförmig verstärkt werden. Das Spritzgussteil 1 umfasst zwei untere Profilabschnitte 11, auf die jeweils ein oberer Profilabschnitt 12 aufgesetzt wird. Dazu weisen die Profilabschnitte 11, 12 im Bereich ihrer Mitte entsprechende Ausnehmungen 13 auf, die die kreuzweise Verbindung zweier Profilabschnitte 11, 12 ermöglichen. Die Befestigung an den Aufstelleinrichtungen 8, 9 erfolgt über Rastelemente 14, die als L-förmige Winkel ausgebildet sind. Die freien Enden der Winkel 14 weisen in dem dargestellten Ausführungsbeispiel jeweils von der Mitte nach außen. Um die Vorrichtung nutzen zu können, wird das Spritzgussteil durch Entnehmen der Einzelteile zerlegt.

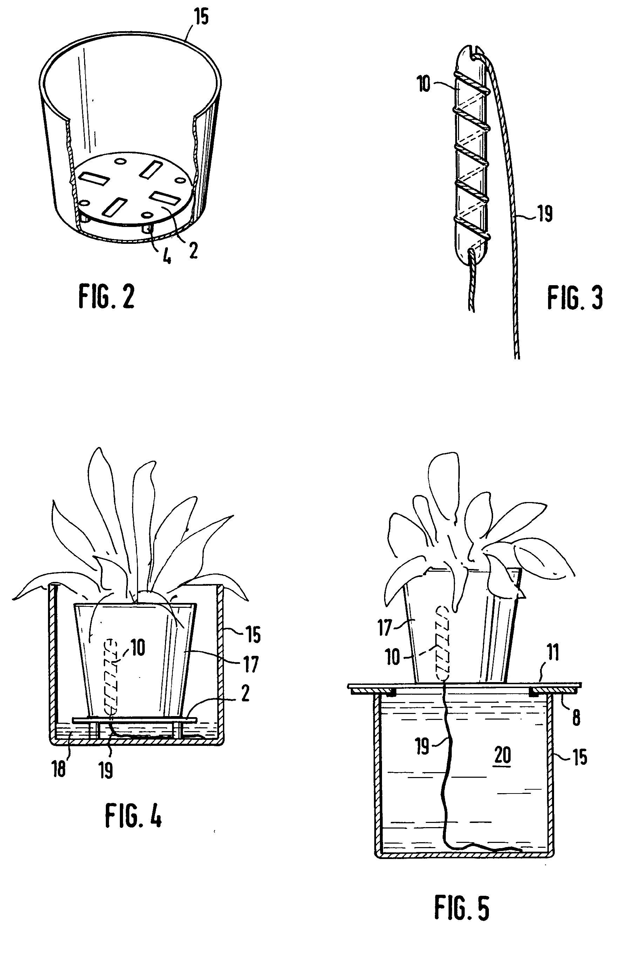

Fig. 2 zeigt eine erste Aufstelleinrichtung 2, die in einen Übertopf 15 eingesetzt ist. Von den ersten Aufstelleinrichtungen 2, 5 wird diejenige ausgewählt, deren Außendurchmesser am besten zum Innendurchmesser des Übertopfes 15 passt. Die Aufstelleinrichtung 2 wurde an ihrer Unterseite mit Füßen 4 versehen, so dass sie in einem bestimmten Abstand zum Boden des Übertopfes 15 steht.

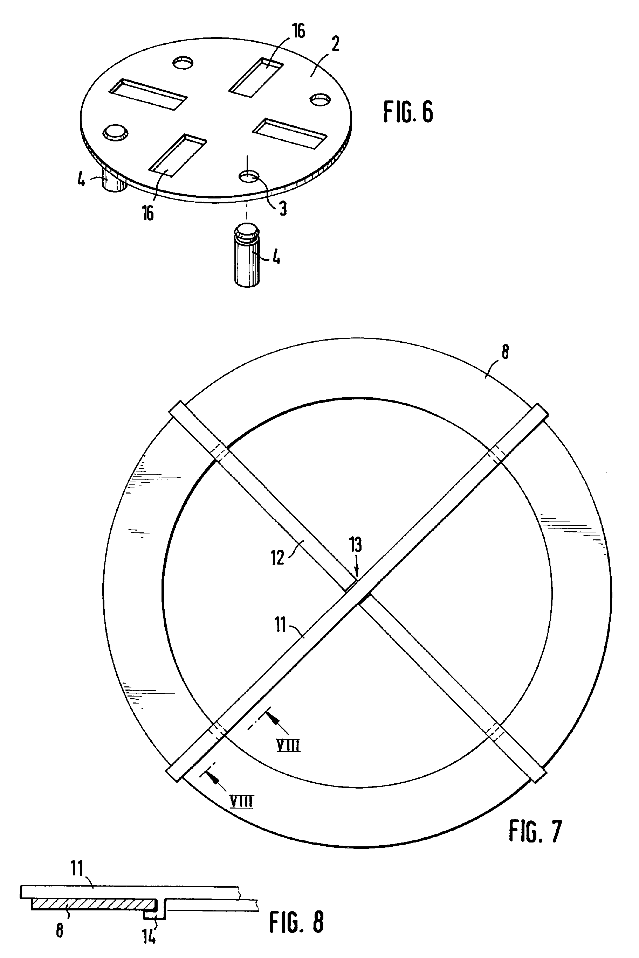

Wie in Fig. 6 am besten zu erkennen ist, werden die Füße 4 in die Öffnungen 3 der Aufstelleinrichtung 2 eingeclipst und dort gehalten. Die kreisförmige Aufstelleinrichtung 2 weist vier rechteckige Ausnehmungen 16 auf, die ursprünglich zur Halterung der Füße 4 dienten. Durch die Ausnehmungen 16 kann ein Docht 19 geführt werden.

Fig. 4 zeigt den Übertopf 15 von Fig. 2 mit einem in einer unteren Position abgestellten Blumentopf 17 in einer teilweise geschnittenen Ansicht. Innerhalb des Übertopfes 15 befindet sich ein Wasservorrat 18, der etwa bis an die Unterkante der Aufstelleinrichtung 2 reicht. Der Blumentopf 17 ist über einen Docht 19 mit dem Wasservorrat 18 verbunden. Ein Ende des Dochtes 19 liegt in dem Wasservorrat 18. Das andere Ende des Dochtes 19 ist auf den Dochthalter 10 gewickelt, der von der Unterseite her in den Blumentopf 17 eingesteckt ist. Dazu wird der Dochthalter 10 durch die Ausnehmungen 16 der Aufstelleinrichtung 2 gesteckt. Der Wasservorrat 18 reicht beispielsweise für drei Tage, ohne dass die Pflanze in dieser Zeit gegossen werden muss. Lediglich beim erstmaligen Bewässern ist es erforderlich, das in dem Blumentopf 17 enthaltende Erdreich von der Oberseite anzufeuchten. Anschließend saugt die Pflanze die benötigte Wassermenge selbsttätig aus dem Wasservorrat 18 an. In einen Blumentopf lassen sich auch mehrere Dochte 19 bzw. Dochthalter 10 einsetzen.

Wie in Fig. 3 dargestellt ist, weist der Dochthalter 10 außenseitig schräg zu seiner Längsachse verlaufende Nuten auf, in die der Docht 19 gewickelt wird, so dass ein Verrutschen verhindert wird. Ebenso wird dadurch die Verteilung der Feuchtigkeit innerhalb des Blumentopfes verbessert.

Der relativ geringe Wasservorrat 18 reicht in Abhängigkeit von der Topfgröße fünf bis sieben Tage. Während einer längeren Abwesenheit, beispielsweise während eines Urlaubs ist eine größere Wassermenge zur Versorgung der Pflanze erforderlich. Wie in Fig. 5 dargestellt ist, kann der Blumentopf 17 dann auf der zweiten Aufstelleinrichtung 8 in einer erhöhten Position abgestellt werden. Die erste Aufstelleinrichtung 2 ist in Fig. 5 nicht dargestellt, sie kann jedoch ohne weiteres in dem Übertopf 15 belassen werden. Es kann auch vorgesehen sein, dass sie ein Filmscharnier zum Zusammenfalten aufweist. Wie in Fig. 5 zu erkennen ist, liegt die zweite Aufstelleinrichtung 8 auf dem oberen Rand des Übertopfes 15 auf. Zudem sind auf der Aufstelleinrichtung 8 Profilabschnitte 11, 12 kreuzförmig angeordnet, so dass der Blumentopf 17 auf den Profilabschnitten 11, 12 abgestellt werden kann. Die Länge des Dochtes 19 ist so gewählt, dass dieser auch in der oberen Position bis zum Boden des Übertopfes 15 reicht, so dass eine Feuchtigkeitsversorgung der Pflanze auch während einer mehrwöchigen Abwesenheit gewährleistet ist. Zum Abstellen des Übertopfes 15 in der oberen Stellung ist es also lediglich erforderlich, den Blumentopf 17 aus dem Übertopf 15 herauszunehmen, den Übertopf 15 mit Wasser aufzufüllen, die Aufstelleinrichtung 8 auf den Übertopf aufzulegen und den Blumentopf 17 darauf abzustellen. Der Dochthalter 10 kann dabei innerhalb des Blumentopfes 17 bleiben, so dass der Umbau sehr schnell erfolgen kann.

Einige Übertöpfe, z.B. aus Ton hergestellte Töpfe sind nicht wasserdicht. In diese kann ein wasserdichtes Gefäß, z.B. ein mit Wasser gefülltes Glas gestellt werden, auf das oberseitig eine der Aufstelleinrichtungen gelegt wird, um eine Standfläche für einen Blumentopf zu bilden. Die Feuchtigkeitsversorgung der Pflanze erfolgt dann über den Wasservorrat des Glases, in das der Docht eintaucht. Bei größeren, rechteckigen Blumenkästen oder unregelmäßig geformten Übertöpfen können mehrere Gläser oder Gefäße eingestellt werden.

Fig. 7 zeigt die zweite Aufstelleinrichtung 8 mit den daran befestigten Profilabschnitten 11, 12 in einer Aufsicht. Die beiden Profilabschnitte 11, 12 sind rechtwinklig zueinander angeordnet, wobei die jeweiligen mittigen Ausnehmungen 13 ineinander eingreifen. Die Oberseiten der Profilabschnitte 11, 12 liegen in einer Ebene, so dass der Blumentopf 17 darauf stabil abgestellt werden kann.

Die Befestigung des Profilabschnitts 11 geht aus Fig. 8 hervor. Fig. 8 ist eine teilweise geschnittene Ansicht entlang der Linie VIII - VIII von Fig. 7. Der Profilabschnitt 11 weist einen Rastabschnitt auf, der als Winkel 14 ausgebildet ist. Das freie Ende des Winkels 14 weist radial vom Kreismittelpunkt nach außen und ist so geformt, dass es die Innenkante der Aufstelleinrichtung 8 umgreifen kann. Die Einzelteile sind aus Kunststoff hergestellt, so dass sie ausreichend flexibel sind, um den Profilabschnitt 11 an der Aufstelleinrichtung 8 an beiden Seiten festzuklemmen. Die Profilabschnitte 11, 12 sind als U-Profile ausgebildet, wobei die freien Schenkel nach unten zeigen. Dadurch wird eine höhere Stabilität erreicht.

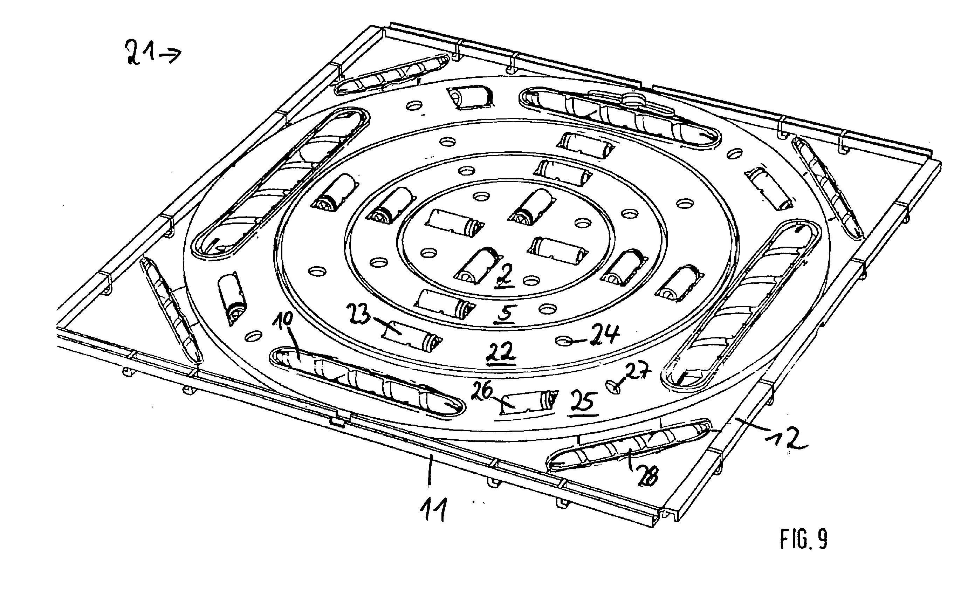

Fig. 9 zeigt ein weiteres Ausführungsbeispiel mit einer größeren Anzahl von Einzelteilen. Das Spritzgussteil 21 weist einen ähnlichen Aufbau wie das Spritzgussteil 1 auf. Die ersten Aufstelleinrichtungen 2, 5 sind identisch. Daran schließt sich eine zweite Aufstelleinrichtung 22 an, die im Gegensatz zu dem ersten Ausführungsbeispiel ebenfalls Füße 23 und Einstecköffnungen 24 für die Füße 23 aufweist. Dadurch kann die Aufstelleinrichtung 22 in einen Übertopf eingesetzt werden und einen Blumentopf in einer unteren Stellung halten. Sie kann jedoch gleichermaßen auf die Oberkante eines Übertopfes aufgelegt werden und einen Blumentopf in der oberen Stellung halten. Dadurch kann ein größerer Bereich von unterschiedlich großen und unterschiedlich geformten Blumentöpfen und Übertöpfen abgedeckt werden. An die Aufstelleinrichtung 22 schließt sich außenseitig die ebenfalls ringförmig ausgebildete Aufstelleinrichtung 25 an. Diese weist Füße 26 und Einstecköffnungen 27 auf, so dass die Aufstelleinrichtung 25 sich sowohl für die untere, als auch für die obere Stellung eignet. Zusätzlich enthält sie insgesamt vier über den Umfang verteilte Dochthalter 10, die herausgetrennt werden können. Die Dochthalter 10 sind unterschiedlich groß. Des Weiteren sind in den Eckbereichen, die durch die Aufstelleinrichtung 25 und benachbarte Profilabschnitte 11, 12 gebildet werden, weitere Dochthalter 28 angeordnet. Gerade bei größeren Pflanzen empfiehlt sich die Verwendung mehrerer Dochthalter 10, 28 um den gesamten Blumentopf gleichmäßig zu bewässern.

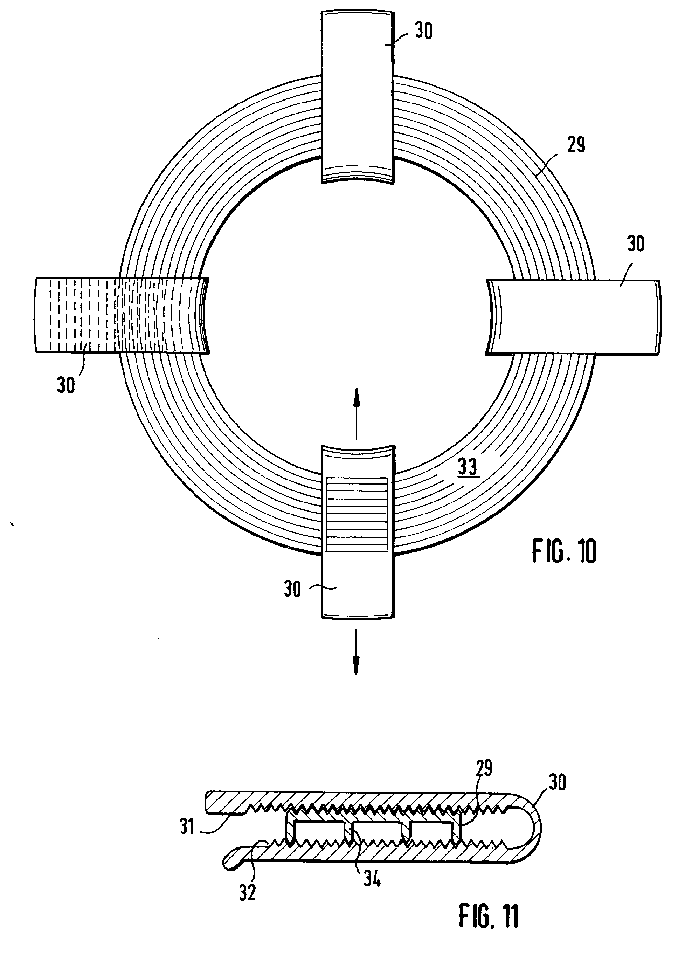

Fig. 10 zeigt ein drittes Ausführungsbeispiel der Erfindung mit einer ringförmigen Aufstelleinrichtung 29. Auf die Aufstelleinrichtung 29 sind insgesamt vier Halteelemente 30 radial aufgeschoben. Der Aufbau und die Funktionsweise gehen aus Fig. 11 hervor, die in einer Schnittdarstellung die ringförmige Aufstelleinrichtung 29 und das auf den Ring aufgeschobene Halteelement 30 zeigt. Das Halteelement 30 weist einen U-förmigen Querschnitt auf und ist an den Innenseiten 31, 32 der parallel zueinander angeordneten Schenkel mit zahnartigen Vorsprüngen versehen. Die Oberseite der Aufstelleinrichtung 29 ist entsprechend gegengleich ausgebildet und weist auf ihrer Oberseite 33 eine Zahnstruktur auf, so dass das Halteelement mit der Aufstelleinrichtung 29 verrastet werden kann. Wie in Fig. 11 zu erkennen ist, sind an der Aufstelleinrichtung 29 unterseitig insgesamt vier ringartige, umlaufende Standfüße 34 ausgebildet. Die Endabschnitte der Standfüße 34 sind spitz ausgebildet, so dass sie in die gegenüberliegenden Zahnzwischenräume des Halteelements 30 eingreifen können. Dadurch wird ein besonders sicherer Halt erzielt. Dennoch können die Halteelemente 30 mit einem gewissen Kraftaufwand radial zur Aufstelleinrichtung 29 nach innen oder nach außen verschoben werden. Nach dem Loslassen verrasten die zahnartigen Innenflächen 31, 32 des Halteelements 30 mit den entsprechenden Gegenflächen der Aufstelleinrichtung 29, so dass sämtliche Halteelemente 30 sicher an der Aufstelleinrichtung 29 gehalten sind.

Der Verbindungsbereich zwischen dem oberen und dem unteren Teil des Halteelements 30 kann mit einer verringerten Dicke ausgeführt sein, so dass das Halteelement 30 die Funktion eines Filmscharniers erhält. Bei dieser Ausführungsform ist es nicht erforderlich, dass die Oberseite und die Unterseite des Halteelements 30 im Bereich der inneren Öffnung bündig miteinander abschließen. Durch das flexible Filmscharnier kann das Halteelement 30 auch mit zueinander verschobenen Ober- und Unterseiten mit der Aufstelleinrichtung 29 verbunden werden. Beispielsweise kann die Unterseite des Halteelements 30 weiter in den Ring hineinragen, so dass ein Blumentopf auf den unteren Schenkel des Halteelements 30 gesetzt wird und gleichzeitig seitlich an dem nach außen versetzten oberen Schenkel des Halteelements 30 seitlich anliegt. Damit wird der Blumentopf sowohl am Boden als auch seitlich gestützt.

Der besondere Vorteil der Aufstelleinrichtung 29 ist, dass diese ohne die Halteelemente in einer unteren Position in einen Übertopf gestellt werden kann, so dass ein darauf abgestellter Blumentopf in einem gewissen Abstand vom Boden des Übertopfes gehalten wird. In den Übertopf kann eine gewisse Wassermenge eingefüllt werden, die dann zur Bewässerung des Blumentopfes dient. Darüber hinaus kann dieselbe Aufstelleinrichtung in einer oberen Position auf die Oberkante des Übertopfes aufgelegt werden, wobei die an der Aufstelleinrichtung befestigten Halteelemente an die jeweiligen Größenverhältnisse durch Verschieben angepasst werden können.

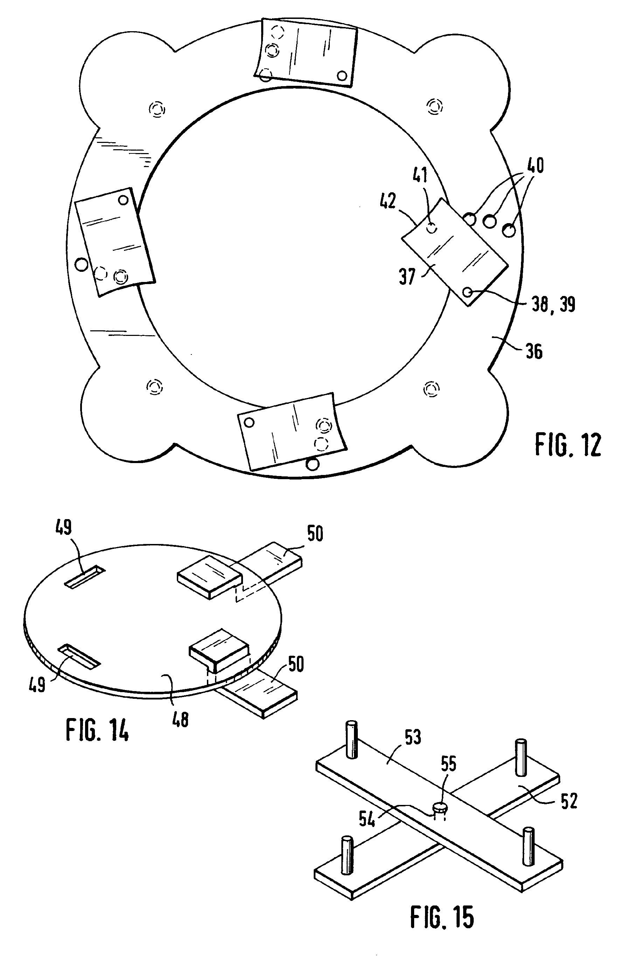

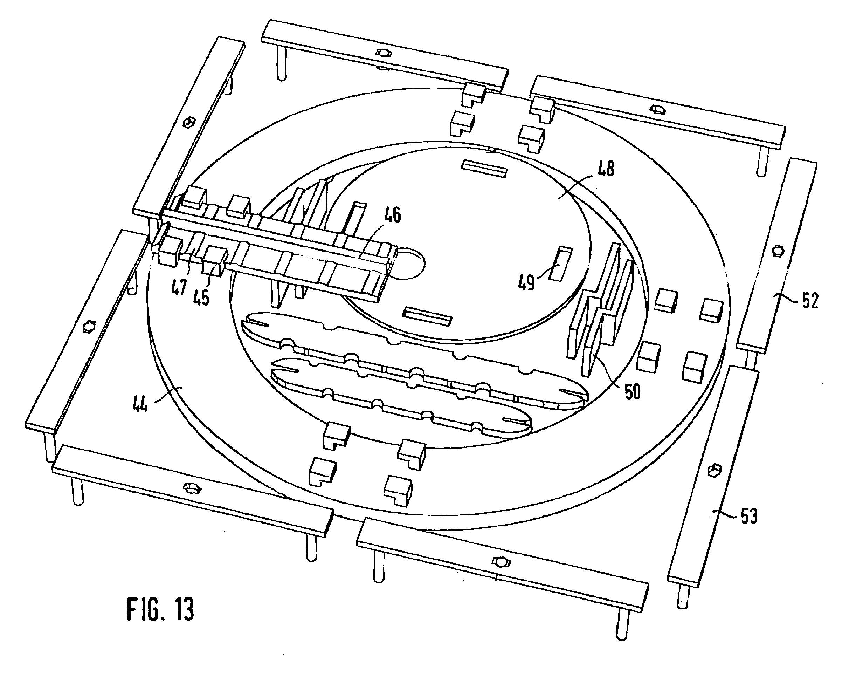

Fig. 12 zeigt ein viertes Ausführungsbeispiel der Erfindung mit einer Aufstelleinrichtung 36, die im Wesentlichen kreisförmig ausgebildet ist und auf der insgesamt vier verschwenkbare Halteelemente 37 befestigt sind. Die plattenförmigen Halteelemente 37 werden jeweils über einen in einer Ecke liegenden Befestigungspunkt 38 an der Aufstelleinrichtung 36 befestigt. Die Befestigung erfolgt über Sicherungsstifte 39, die sowohl durch die Halteelemente 37 als auch durch eine entsprechende Bohrung in der Aufstelleinrichtung 36 gesteckt werden. Es kann auch vorgesehen sein, dass ein Sicherungsstift unmittelbar an dem Halteelement oder an der Aufstelleinrichtung angeformt ist und in eine Bohrung des gegenüber liegenden Teils eingreift. Der Befestigungspunkt 38 dient gleichzeitig als Drehpunkt für das Halteelement 37. Auf diese Weise kann der Auflagebereich für einen Blumentopf sowohl in Richtung des Ringinneren der Aufstelleinrichtung 36 als auch nach außen verkleinert bzw. vergrößert werden. Um eine unerwünschte Verschiebung der Halteelemente 37 zu verhindern, sind an der Aufstelleinrichtung 36 verschiedene Bohrungen 40 angebracht, so dass eine der Bohrungen 40 mit einer Ausnehmung 41 des Halteelements 37 in Deckung gebracht werden kann, um einen Sicherungsstift durch beide Bauteile zu stecken. Die Bohrungen 41 bzw. gegebenenfalls mehrere Bohrungen sind am dem Befestigungspunkt 38 gegenüber liegenden Ende des Halteelements 37 angebracht. Anstelle der Bohrung kann an dem Halteelement 37 auch ein Sicherungsstift angeformt sein. Wie in Fig. 12 zu erkennen ist, ist die nach innen weisende Fläche 42 des Halteelements 37 abgerundet ausgebildet. Es ist daher auch möglich, einen Blumentopf in die Aufstelleinrichtung 36 so einzusetzen, dass seine Außenseiten teilweise oberhalb und teilweise unterhalb der Aufstelleinrichtung 36 liegen und der Blumentopf klemmend gehalten wird.

Fig. 13 zeigt ein fünftes Ausführungsbeispiel der Erfindung in der Form eines Spritzgussteils mit einer Vielzahl von Einzelteilen. Der besseren Übersichtlichkeit halber sind die beim Spritzgießen erforderlichen Verbindungsstücke zwischen den Einzelteilen nicht dargestellt. Das Spritzgussteil 43 wird als ein zusammenhängendes Bauteil produziert, von dem die Einzelteile abtrennbar sind. Die Aufstelleinrichtung 44 weist auf ihrer Unterseite jeweils zwei, sich paarweise gegenüber liegende Halteschultern 45 auf, die zur Befestigung eines Halteelements 46 vorgesehen sind. Dazu sind an dem Halteelement 46 mehrere höckerartige Vorsprünge 47 ausgebildet, so dass das Halteelement 46 schrittweise unter die Halteschultern 45 der Aufstelleinrichtung 44 geschoben werden kann. In Fig. 13 ist nur ein einziges Halteelement 46 dargestellt, vorzugsweise werden jedoch vier Halteelemente an der Aufstelleinrichtung 44 angebracht.

Innerhalb der Aufstelleinrichtung 44 befindet sich eine abtrennbare Aufstelleinrichtung 48, die kreisförmig ausgebildet ist und insgesamt vier rechteckige Ausnehmungen 49 aufweist. Außerdem umfasst das Spritzgussteil 43 weitere Halteelemente 50, die zweifach abgewinkelt sind.

Der Aufbau und das Zusammenwirken dieser Einzelteile ist in Fig. 14 dargestellt. Die Halteelemente 50 lassen sich in die Ausnehmung 49 der Aufstelleinrichtung 48 einsetzen, wobei nach dem Zusammenbau eine Fläche der Halteelemente 50 auf der Oberseite der Aufstelleinrichtung 48 liegt, gleichzeitig liegt die gegenüber liegende Fläche des Halteelements 50 an der Unterseite der Aufstelleinrichtung 48 an. Durch diesen beidseitigen, flächigen Kontakt ergibt sich eine besonders stabile Aufstellfläche für einen Blumentopf. Es kann auch vorgesehen sein, dass das Spritzgussteil 43 unterschiedlich lange Halteelemente 50 aufweist, mit denen die Größe entsprechend variiert werden kann.

Das Spritzgussteil 43 umfasst ferner eine Reihe von Abstandhaltern 52, 53, die außenseitig um die Aufstelleinrichtung 44 herum angeordnet sind. Jeweils zwei Abstandhalter 52, 53 lassen sich kreuzförmig zusammenstecken und ergeben eine weitere Aufstelleinrichtung, die in einen Übertopf gestellt werden kann und zum Abstellen eines Blumentopfes in einer bestimmten Höhe dient. In Fig. 15 ist eine aus zwei Abstandhaltern 52, 53 zusammengesetzte Aufstelleinrichtung von der Unterseite her gezeigt. Der obere Abstandhalter 53 weist eine im Wesentlichen rechteckige Ausnehmung 54 auf, so dass er in einer bestimmten Relativlage auf einen stiftartigen Fortsatz 55 des Abstandhalters 52 aufgesteckt werden kann. Der Abstandhalter 53 wird nach dem Aufsetzen gedreht, bis er rechtwinklig zum Abstandhalter 52 liegt. In dieser Lage sind die Abstandhalter 52, 53 durch den Endabschnitt des Fortsatzes 55 gesichert und die kreuzförmige Aufstelleinrichtung kann umgekehrt in einen Übertopf gestellt werden.

## Patentansprüche

1. Vorrichtung zum Bewässern eines Blumentopfes, der in einer unteren Position in einen einen Wasservorrat enthaltenden Übertopf vom Boden beabstandet einsetzbar und in einer oberen Position im Bereich der Oberkante des Übertopfes abstellbar ist, wobei in den Blumentopf ein Docht zur Versorgung mit Feuchtigkeit eingesetzt ist, dessen anderes Ende in dem Wasservorrat liegt, **dadurch gekennzeichnet, dass** die Vorrichtung eine erste Aufstelleinrichtung (2, 5) zum Abstellen des Blumentopfes (17) in einer unteren Position und eine zweite, auf den Übertopf (15) auflegbare oder in den Übertopf (15) einsetzbare und im Bereich der Oberkante des Übertopfes (15) klemmend gehaltene Aufstelleinrichtung (8, 9) zum Abstellen des Blumentopfes (17) in der oberen Position aufweist.

2. Vorrichtung nach Anspruch 1, **dadurch gekennzeichnet, dass** an der ersten und/oder zweiten Aufstelleinrichtung (2, 5, 8, 9, 22, 25) Standfüße (4, 7, 23, 26) lösbar anbringbar sind.

3. Vorrichtung nach Anspruch 1 oder 2, **dadurch gekennzeichnet, dass** die Aufstelleinrichtungen (2, 5, 8, 9, 22, 25) im Wesentlichen ring- oder scheibenförmig ausgebildet sind.

4. Vorrichtung nach einem der vorangehenden Ansprüche, **dadurch gekennzeichnet, dass** an der zweiten Aufstelleinrichtung (8, 9, 22, 25) Profilabschnitte (11, 12) vorzugsweise in Radialrichtung lösbar befestigbar sind.

5. Vorrichtung nach Anspruch 4, **dadurch gekennzeichnet, dass** an der zweiten Aufstelleinrichtung (8, 9, 22, 25) zwei sich kreuzende, vorzugsweise radial zur Aufstelleinrichtung (8, 9, 22, 25) angeordnete Profilabschnitte (11, 12) lösbar befestigbar sind.

6. Vorrichtung nach Anspruch 4 oder 5, **dadurch gekennzeichnet, dass** die Profilabschnitte (11, 12) an der zweiten Aufstelleinrichtung (8, 9, 22, 25) außenseitig überstehen.

7. Vorrichtung nach einem der Ansprüche 4 bis 6, **dadurch gekennzeichnet, dass** die Oberseiten der Profilabschnitte (11, 12) in einer Ebene liegen.

8. Vorrichtung nach einem der vorangehenden Ansprüche, **dadurch gekennzeichnet, dass** der Blumentopf (15) derart in die zweite Aufstelleinrichtung (8, 9, 22, 25) einsetzbar ist, dass seine Außenmantelfläche im Wesentlichen formschlüssig an der Ringinnenfläche anliegt.

9. Vorrichtung nach einem der vorangehenden Ansprüche, **dadurch gekennzeichnet, dass** das mit dem Blumentopf (15) verbundene Ende des Dochts (19) um einen stabförmigen Dochthalter (10, 28) wickelbar ist, der durch eine unterseitige Öffnung des Blumentopfes (15) in diesen einsetzbar ist.

10. Vorrichtung nach Anspruch 9, **dadurch gekennzeichnet, dass** der Dochthalter (10, 28) eine unter einem Winkel zu seiner Längsachse verlaufende, umlaufende Nut zum Eingreifen des Dochts (19) aufweist.

11. Vorrichtung nach einem der vorangehenden Ansprüche, **dadurch gekennzeichnet, dass** an der Aufstelleinrichtung (29) wenigstens ein Standfuß (34) zum Abstellen in einem Übertopf angeformt ist.

12. Vorrichtung nach Anspruch 11, **dadurch gekennzeichnet, dass** der Standfuß (34) im Wesentlichen umlaufend ausgebildet ist.

13. Vorrichtung nach Anspruch 11 oder 12, **dadurch gekennzeichnet, dass** an der Aufstelleinrichtung (29) mehrere konzentrische angeordnete Standfüße (34) angeformt sind.

14. Vorrichtung nach einem der vorangehenden Ansprüche, **dadurch gekennzeichnet, dass** die Aufstelleinrichtung (29, 36) innen und/oder außen überragende Halteelemente (30, 37) daran befestigbar sind.

15. Vorrichtung nach Anspruch 14, **dadurch gekennzeichnet, dass** die Halteelemente (30) U-förmig ausgebildet sind und mit ihrer offenen Seite radial auf die Aufstelleinrichtung (29) aufschiebbar sind und diese ober- und/oder unterseitig umgreifen.

16. Vorrichtung nach Anspruch 14 oder 15, **dadurch gekennzeichnet, dass** die Aufstelleinrichtung (29) auf ihrer Oberseite (33) und/oder im Bereich des bzw. der Standfüße (34) und/oder die Halteelemente (30) an ihren innenliegenden Flächen (31, 32) Vertiefungen und/oder Vorsprünge aufweisen.

17. Vorrichtung nach Anspruch 16, **dadurch gekennzeichnet, dass** die Vertiefungen und/oder Vorsprünge der Aufstelleinrichtung (29) und der Halteelemente (30) zueinander gegengleich ausgebildet sind und formschlüssig miteinander verrastbar sind.

18. Vorrichtung nach einem der Ansprüche 14 bis 17, **dadurch gekennzeichnet, dass** der Verbindungsbereich zwischen dem oberen und dem unteren Schenkel des Halteelements (30) als Filmscharnier ausgebildet ist.

19. Vorrichtung nach einem der vorangehenden Ansprüche, **dadurch gekennzeichnet, dass** an der Aufstelleinrichtung (36) nach innen und/oder außen verschwenkbare Halteelemente (37) lösbar befestigbar sind.

20. Vorrichtung nach Anspruch 19, **dadurch gekennzeichnet, dass** die Aufstelleinrichtung (36) Stecköffnungen (40) aufweist, in die zur Befestigung der Halteelemente (37) Sicherungsstifte (39) einsteckbar sind.

21. Vorrichtung nach Anspruch 19 oder 20, **dadurch gekennzeichnet, dass** an den Halteelementen (37) oder an der Aufstelleinrichtung (40) Sicherungsstifte (39) angeformt sind.

22. Vorrichtung nach einem der vorangehenden Ansprüche, **dadurch gekennzeichnet, dass** die Aufstelleinrichtung (44) Halteschultern (45) aufweist, unter die Halteelemente (46) verrastend einschiebbar sind.

23. Vorrichtung nach einem der vorangehenden Ansprüche, **dadurch gekennzeichnet, dass** die Aufstelleinrichtung (48) Ausnehmungen (49) aufweist, in die ein abgewinkeltes Halteelement (50) einsetzbar ist.

24. Vorrichtung nach Anspruch 23, **dadurch gekennzeichnet, dass** eine erste Fläche des Halteelements (50) an der Oberseite und eine zweite Fläche zur ersten im Wesentlichen parallele Fläche an der Unterseite der Aufstelleinrichtung (48) anliegt.

25. Vorrichtung nach einem der vorangehenden Ansprüche, **dadurch gekennzeichnet, dass** sie aus einem Kunststoffmaterial herstellbar ist.

26. Vorrichtung nach einem der vorangehenden Ansprüche, **dadurch gekennzeichnet, dass** sie durch Spritzgießen herstellbar ist.

27. Vorrichtung nach einem der vorangehenden Ansprüche, **dadurch gekennzeichnet, dass** sie als zusammenhängendes Spritzgussteil (1, 21, 43) mit abtrennbaren und/oder ausbrechbaren Einzelteilen herstellbar ist.

28. Vorrichtung nach Anspruch 27, **dadurch gekennzeichnet, dass** das Spritzgussteil (1, 21, 43) Einzelteile für mehrere, vorzugsweise zwei oder drei Vorrichtungssätze umfasst.

29. Vorrichtung nach Anspruch 28, **dadurch gekennzeichnet, dass** bei einem zwei Vorrichtungssätze umfassenden Spritzgussteil (1) die erste Aufstelleinrichtung (2) des ersten Satzes kreisförmig und die erste Aufstelleinrichtung (5) des zweiten Satzes und die zweiten Aufstelleinrichtungen (8, 9, 22, 25) des ersten und zweiten Satzes als konzentrische Ringe ausgebildet sind, wobei der Außendurchmesser eines Teils im Wesentlichen dem Innendurchmesser des benachbarten Teils entspricht.

30. Vorrichtung nach Anspruch 28 oder 29, **dadurch gekennzeichnet, dass** das Spritzgussteil (1, 21) wenigstens vier vorzugsweise rechteckig angeordnete Profilabschnitte (11, 12) aufweist.

31. Vorrichtung nach einem der Ansprüche 4 bis 30, **dadurch gekennzeichnet, dass** der bzw. jeder Profilabschnitt (11, 12) als U-Profil ausgebildet ist.

32. Vorrichtung nach einem der Ansprüche 4 bis 31, **dadurch gekennzeichnet, dass** der bzw. jeder Profilabschnitt (11, 12) Rastelemente zum Verrasten an einer Aufstellfläche (8, 9, 22, 25) aufweist.

33. Vorrichtung nach einem der Ansprüche 4 bis 32, **dadurch gekennzeichnet, dass** die Rastelemente eines Profilabschnitts (11, 12) als L-förmige Winkel (14) ausgebildet sind, deren freie Enden von der Mitte eines Profilabschnitts (11, 12) in Längsrichtung nach außen weisen.

34. Vorrichtung nach einem der Ansprüche 27 bis 33, **dadurch gekennzeichnet, dass** das Spritzgussteil (43) entnehmbare, paarweise kreuzförmig zusammensteckbare Abstandhalter (52, 53) umfasst.
